(19) Europäisches Patentamt
European Patent Office
Office européen des brevets

(11) **EP 4 611 103 A1**

(12) **EUROPEAN PATENT APPLICATION**
published in accordance with Art. 153(4) EPC


(43) Date of publication:
**03.09.2025 Bulletin 2025/36**

(21) Application number: **23938015.7**

(22) Date of filing: **25.05.2023**

(51) International Patent Classification (IPC):
***H01M 10/0567*** *(2010.01)*

(52) Cooperative Patent Classification (CPC):
Y02E 60/10

(86) International application number:
**PCT/CN2023/096412**

(87) International publication number:
**WO 2024/239344 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Contemporary Amperex Technology Co., Limited**
**Ningde, Fujian 352100 (CN)**

(72) Inventors:
- **GUO, Jie**
  **Ningde, Fujian 352100 (CN)**
- **HAN, Changlong**
  **Ningde, Fujian 352100 (CN)**
- **WU, Zeli**
  **Ningde, Fujian 352100 (CN)**
- **DENG, Yilin**
  **Ningde, Fujian 352100 (CN)**
- **HUANG, Lei**
  **Ningde, Fujian 352100 (CN)**
- **WANG, Guan**
  **Ningde, Fujian 352100 (CN)**
- **CAI, Linhua**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**


(54) **SECONDARY BATTERY AND ELECTRIC DEVICE**


(57) The present application provides a secondary battery and an electric device. The secondary battery comprises a battery case provided with an accommodating cavity, a battery cell assembly located in the accommodating cavity, and an electrolyte. The electrolyte comprises a chain carboxylic acid ester compound, wherein based on the total mass of the electrolyte, the mass content W of the chain carboxylic acid ester compound satisfies: 0.03 ≤ W/R ≤ 7. The secondary battery has excellent fast charging performance and long service life.


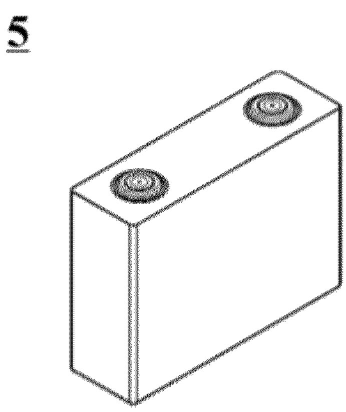


FIG. 1




Processed by Luminess, 75001 PARIS (FR)

## Description

### TECHNICAL FIELD

The present application relates to the technical field of secondary batteries, and in particular to a secondary battery and an electrical apparatus.

### BACKGROUND

In recent years, secondary batteries are widely used in energy storage power source systems such as water power, thermal power, wind power and solar power stations, as well as power tools, electric bicycles, electric motorcycles, electric vehicles, military equipment, aerospace and other fields, which promote the development of secondary batteries towards higher energy density and power performance, longer cycle life, etc.

The fast charge performance and life performance of cells of the secondary batteries is one of hot spots of research in the field of batteries. Performances of electrolytes have a critical impact on performances of the secondary batteries, so there is an urgent need to improve the fast charge performance and life performance of the secondary batteries by improving the composition of the electrolytes.

### SUMMARY

In view of the problems in the BACKGROUND, the present application provides a secondary battery, aiming to improve fast charge performance of the secondary battery and prolong service life thereof.

In a first aspect of the present application, provided is a secondary battery, which includes a battery case having an accommodating cavity, a cell assembly disposed in the accommodating cavity, and an electrolyte; where;

the electrolyte contains a chain carboxylate compound, where based on the total mass of the electrolyte, a mass percentage W of the chain carboxylate compound and a residual space R satisfy: 0.03≤W/R≤7, the residual space $R = \frac{V1-(V2+V3)}{C}$ mL/Ah, where V1 represents an internal volume of the accommodating cavity of the secondary battery; V2 represents a volume of the cell assembly; V3 represents a volume of the electrolyte; and C represents a discharge capacity of the secondary battery.

In some embodiments, the mass percentage W of the chain carboxylate compound and the residual space R satisfy: 0.05≤W/R≤7, 0.1≤W/R≤7, 0.15≤W/R≤6 or 3≤W/R≤7.

In the secondary battery of the present application, the chain carboxylate compound has a low viscosity, which can increase transport rate of metal ions (e.g., lithium ions and sodium ions) of an active material in the electrolyte well and improve the kinetics and fast charge performances of the secondary battery, but the chain carboxylate compound has the defect of deterioration in gas generation. When the mass percentage of the chain carboxylate compound and the residual space R satisfy the above relationship, the large residual space may provide more space to accommodate gas generated by the cell assembly due to side reactions, reduce an internal pressure of the battery case or maintain the basic stability of the internal pressure of the battery case, thereby prolonging service life of the secondary battery.

In any embodiment, the chain carboxylate compound includes a structure represented by Formula (I),

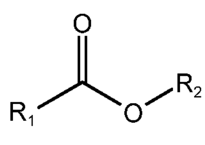

Formula I

where $R_1$ and $R_2$ each independently include a $C_{1-6}$ alkyl group.

In any embodiments, the chain carboxylate compound includes one or more of ethyl acetate, methyl acetate, propyl acetate, and methyl butyrate.

The electrolyte containing the above chain carboxylate compound has a low viscosity, which is conducive to increasing transport rate of metal ions in the active material and improving kinetics performance of the secondary battery, thereby improving fast charge performance of the secondary battery.

In any embodiment, based on the total mass of the electrolyte, the mass percentage W of the chain carboxylate compound is 5% to 70%, and optionally 10% to 60%.

The mass percentage of the chain carboxylate compound is controlled within an appropriate range, which can not only effectively reduce the viscosity of the electrolyte, increase the transport rate of metal ions, improve the kinetics performance of the secondary battery and improve the fast charge performance of the secondary battery, but also reduce

the deterioration in gas generation due to the excessive mass percentage of the chain carboxylate compound, thereby prolonging service life of the secondary battery and enabling the secondary battery to have both improved fast charge performance and long service life.

In any embodiment, R is 0.05 mL/Ah to 2 mL/Ah, and optionally 0.1 mL/Ah to 2 mL/Ah.

R is controlled within an appropriate range, which can not only provide a sufficient space for the battery case to accommodate gas generated by the cell assembly, reduce the internal pressure of the battery case or maintain the basic stability of the internal pressure of the battery case and prolong service life of the secondary battery, but also control the volume of the accommodating cavity within an appropriate range, reduce the increase in production cost due to the battery case being too large, and balance the service life and the production cost of the secondary battery.

In any embodiment, the electrolyte further contains a film-forming additive, the film-forming additive including one or more of a sulphate compound and a fluorocarbonate compound.

The film-forming additive may form a film on a positive electrode plate side to inhibit reactions of chain carboxylate on the positive electrode plate side. Moreover, the film-forming additive may also form a uniform and dense SEI film on a negative electrode plate side, which can further inhibit side reactions of the electrolyte on the negative electrode plate side, improve gas generation performance of the electrolyte, and prolong service life of the secondary battery.

In any embodiment, the sulphate compound includes one or more of 4,4'-bis(ethylene sulfate), ethylene sulfate, diethyl sulfate, dimethyl sulfate, and 4,4'-bi(1,3,2-dioxathiolane)-2,2,2,2-tetraoxide, and optionally includes one or more of 4,4'-bis(ethylene sulfate) and ethylene sulfate.

The above sulphate compound may form a $Li_2SO_4$-rich SEI film on the negative electrode plate side. The SEI film can inhibit the side reactions of the electrolyte on the negative electrode plate side, improve gas generation performance of the electrolyte, and prolong service life of the secondary battery.

In any embodiment, the fluorocarbonate compound includes one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro -2-methylethylene carbonate, or trifluoromethylethylene carbonate, and optionally includes fluoroethylene carbonate.

The fluorocarbonate compound described above may form a LiF-rich SEI film on the negative electrode plate side. The SEI film can inhibit the side reactions of the electrolyte on the negative electrode plate side, improve gas generation performance of the electrolyte, and prolong service life of the secondary battery.

In any embodiment, based on the total mass of the electrolyte, a mass percentage A of the sulphate compound and a mass percentage B of the fluorocarbonate compound satisfy: $0.03 \leq A/B \leq 20$, and optionally $0.05 \leq A/B \leq 10$.

The sulphate compound and the fluorocarbonate compound are used in combination, which is conducive to further inhibiting the side reactions of the electrolyte. Moreover, a mass ratio between the sulphate compound and the fluorocarbonate compound is controlled within an appropriate range, enabling the secondary battery to have excellent fast charge performance and long service life.

In any embodiment, based on the total mass of the electrolyte, the mass percentage A of the sulphate compound is 0.1% to 2%, and optionally 0.5% to 2%; and the mass percentage B of the fluorocarbonate compound is 0.1% to 5%, and optionally 0.1% to 4%.

The mass percentages of the sulphate compound and the fluorocarbonate compound are controlled within an appropriate range respectively, which enables the film-forming additive in the secondary battery to be in an appropriate range, and can inhibit the interface side reactions of the positive electrode and/or negative electrode, and improve power performance of the secondary battery and prolong service life thereof.

In any embodiment, based on the total mass of the electrolyte, the mass percentage W of the chain carboxylate compound, the mass percentage A of the sulphate compound and the mass percentage B of the fluorocarbonate compound satisfy: $0.7 \leq W/(A+B) \leq 30$, and optionally $1 \leq W/(A+B) \leq 27.3$.

The mass percentage W of the chain carboxylate compound, the mass percentage A of the sulphate compound and the mass percentage B of the fluorocarbonate compound are controlled to satisfy the relationship of $0.7 \leq W/(A+B) \leq 30$, which enables the synergistic effect between the chain carboxylate compound and the film-forming additive, improves fast charge performance of the secondary battery and prolongs service life of the secondary battery. W, A and B are further controlled to satisfy the relationship of $1 \leq W/(A+B) \leq 27.3$, which is conducive to further improving fast charge performance of the secondary battery and prolonging service life thereof.

In any embodiment, the electrolyte further contains a sodium salt, the lithium salt including one or more of LiFSI and $LiPF_6$; or the electrolyte further contains a sodium salt, the sodium salt including one or more of NaFSI and $NaPF_6$.

In any embodiment, based on the total mass of the electrolyte, a mass percentage of the lithium or sodium salt is 8% to 20%, and optionally 10% to 15%; or based on the total mass of the electrolyte, a mass percentage of the sodium salt is 9% to 21%, and optionally 11% to 16%.

The lithium or sodium salt is controlled within an appropriate range, which is conducive to improving internal concentration polarization of the cell assembly, thereby prolonging service life of the secondary battery.

In any embodiment, the lithium salt includes LiFSI and $LiPF_6$. Based on the total mass of the electrolyte, a mass ratio of LiFSI to $LiPF_6$ is not less than 0.4 and not more than 7, and optionally, the mass ratio of LiFSI to $LiPF_6$ is not less than 0.5 and not more than 2.

For a lithium secondary battery, LiFSI and $LiPF_6$ are used in combination, enabling the electrolyte to have excellent lithium ion transport number and thermal stability. The ratio of the mass percentage between LiFSI and $LiPF_6$ is controlled within an appropriate range, which is conducive to improving fast charge performance of the secondary battery and prolonging service life thereof.

In any embodiment, the sodium salt includes NaFSI and $NaPF_6$. Based on the total mass of the electrolyte, a mass ratio of NaFSI to $NaPF_6$ is not less than 0.4 and not more than 7, and optionally the mass ratio of NaFSI to $NaPF_6$ is not less than 0.5 and not more than 2.

For a sodium secondary battery, NaFSI and $NaPF_6$ are used in combination, enabling the electrolyte to have excellent sodium ion transport number and thermal stability. The ratio of the mass percentages of NaFSI and $NaPF_6$ is in an appropriate range, which is conducive to improving fast charge performance of the secondary battery and prolonging service life thereof.

In any embodiment, the electrolyte has a viscosity of 2 mPa.s to 5 mPa.s, and optionally 3 mPa.s to 4.6 mPa.s as measured by a rotor test method at an ambient temperature of 25°C.

The viscosity of the electrolyte is in an appropriate range, which is conducive to increasing transport rate of metal ions, improving kinetics performance of the secondary battery, and improving fast charge performance of the secondary battery.

In any embodiment, the secondary battery has a CB value of 1.05 to 1.5, and optionally 1.05 to 1.3.

The CB value of the secondary battery is controlled within an appropriate range, which is conducive to providing sufficient active sites for the negative electrode plate to receive metal ions, improving active metal (e.g., lithium or sodium) precipitated from an interface of the negative electrode plate, and improving fast charge performance of the secondary battery.

In any embodiments, the secondary battery includes at least one or more of a lithium battery, a sodium battery and a potassium battery.

In a second aspect, the present application provides an electrical apparatus, including the secondary battery in the first aspect of the present application.

## BRIEF DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

Description of reference numerals:
1 battery pack; 2 upper box; 3 lower box; 4 battery module; 5 secondary battery; 51 case; 52 cell assembly; 53 cover plate.

## DETAILED DESCRIPTION

Hereinafter, embodiments of an electrolyte, a secondary battery and an electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of

60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "comprising" and "including" mentioned in the present application may be open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Viscosity of an electrolyte affects transport rate of metal ions, which in turn affects charge capacity of a battery. Researchers have found that a carboxylate compound has a low viscosity, and the introduction of the carboxylate compound into the electrolyte can effectively increase the transport rate of metal ions. However, the carboxylate compound is not redox-resistant and has poor compatibility with a positive/negative electrode plate, which is prone to an increase in gas generation of the battery, causes an increase of internal pressure of the battery, and is not conducive to prolonging service life of the battery.

[Secondary battery]

The present application provides a secondary battery, which may balance fast charge performance and service life of the secondary battery.

The secondary battery includes a battery case having an accommodating cavity, a cell assembly disposed in the accommodating cavity, and an electrolyte. The electrolyte contains a chain carboxylate compound, where based on the total mass of the electrolyte, a mass percentage W of the chain carboxylate compound and a residual space R satisfy: $0.03 \le W/R \le 7$, $R = \frac{V1-(V2+V3)}{C}$ mL/Ah, where V1 represents an internal volume (ml) of the accommodating cavity of the secondary battery; V2 represents a volume (ml) of the cell assembly; V3 represents a volume (ml) of the electrolyte; and C represents a discharge capacity (Ah) of the secondary battery.

The accommodating cavity of the secondary battery typically represents the internal space of the battery case. In some embodiments, as shown in Fig. 2, the case 51 may include a base plate and a side plate connected onto the base plate, and the base plate and the side plate enclose to form the accommodating cavity.

In the present application, the capacity of the secondary battery denoted with C is a discharge capacity of the secondary battery. In general, the battery capacity needs to be preset to meet requirements for different application scenes of the battery during preparation of the secondary battery. The preset battery capacity is a design capacity. After the secondary battery is prepared, the discharge capacity can be obtained by testing. With respect to the design capacity and the discharge capacity of the secondary battery, in some cases, such as in a battery preparation process, the discharge capacity is replaced with the design capacity for material calculation and preparation; in other cases, such as after the battery is freshly prepared, the slight difference between the design capacity and the discharge capacity is acceptable in the art and the two may be used alternatively. It will be appreciated that in the battery preparation process, the design capacity may be used as the discharge capacity to adjust the residual space to obtain the desired secondary battery. For a prepared secondary battery, the discharge capacity is used for calculating and adjusting the residual space of the secondary battery. Methods for testing the discharge capacity of the secondary battery, or methods for calculating the

design capacity of the secondary battery, are open and known to those skilled in the art.

In some embodiments, a method for testing the discharge capacity of a single cell of the secondary battery may include: placing the secondary battery in a 25°C environment for standing until the battery temperature is constant at 25°C; charging the secondary battery to a charge cut-off voltage with a current at 1/3C1; standing for 10 minutes; charging the secondary battery to a charge cut-off voltage with a current at 0.05C1; standing for another 10 minutes; discharging to a discharge cut-off voltage with a current at 1/3C1, recording the discharge capacity here as a battery discharge capacity C at "25°C@0.33C1", where C1 is a rated capacity marked on the cell. The rated capacity marked on the cell is also known as a mark capacity.

In the present application, a desired value of the residual space R may be obtained by adjusting one or more parameters including V1, V2, V3, and C. In some embodiments, the case of the secondary battery has no change, and the desired value of the residual space R may be obtained by adjusting one or more parameters including V2, V3, and C. In some embodiments, the case of the secondary battery and the capacity of the battery have no change, and the desired value of the residual space R may be obtained by adjusting one or more parameters including V2 and V3. The value of the residual space R may be adjusted in ways including, but not limited to, those described above, and those skilled in the art may obtain the desired value of the residual space R by adjusting one or more parameters including V1, V2, V3, and C based on acquired knowledge of ordinary skills in the art.

In some embodiments, based on the total mass of the electrolyte, the ratio W/R of the mass percentage W of the chain carboxylate compound to the residual space R is optionally 0.03, 0.05, 0.1, 0.5, 1, 2, 3, 4, 5, 6, and 7, or a value in a range consisting of any two of the above.

In some embodiments, the mass percentage W of the chain carboxylate compound and the residual space R satisfy: $0.05 \le W/R \le 7$, $0.1 \le W/R \le 7$, $0.3 \le W/R \le 7$, $0.6 \le W/R \le 7$, $0.7 \le W/R \le 7$, $0.2 \le W/R \le 7$, $0.15 \le W/R \le 6$ or $3 \le W/R \le 7$.

In the secondary battery of the present application, the electrolyte using the chain carboxylate compound may have a low viscosity, which increases transport rate of metal ions in an active material of the secondary battery, improves kinetics performance of the secondary battery, and improves fast charge performance of the secondary battery. The mass percentage of the chain carboxylate compound and the space in the accommodating cavity that is not occupied by the cell assembly and the electrolyte are regulated, which can provide a sufficient space to accommodate gas generated from side reactions of the cell assembly, avoid or reduce the defect of deterioration in gas generation due to the use of the chain carboxylate compound, lower an internal pressure of the battery case or maintain the basic stability of the internal pressure of the battery case, thereby prolonging service life of the secondary battery and enabling the secondary battery to have both improved fast charge performance and long service life.

In some embodiments, the chain carboxylate compound includes a structure represented by Formula I,

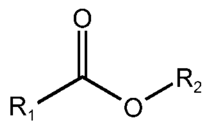
Formula I

where $R_1$ and $R_2$ each independently include a $C_{1-6}$ alkyl group.

In some embodiments, $R_1$ and $R_2$ each independently include a $C_{1-4}$ alkyl group. In some embodiments, $R_1$ and $R_2$ each independently include a $C_{1-3}$ alkyl group. In some embodiments, $R_1$ and $R_2$ each independently include a $C_{1-2}$ alkyl group, e.g., methyl and ethyl.

In some embodiments, the chain carboxylate compound includes one or more of ethyl acetate, methyl acetate, ethyl propionate, propyl acetate, methyl propionate and methyl butyrate.

The electrolyte using the above-mentioned chain carboxylate compound as a solvent has a low viscosity, which is conducive to increasing transport rate of metal ions and improving kinetics performance of the secondary battery, thereby improving fast charge performance of the secondary battery.

In some embodiments, based on the total mass of the electrolyte, the mass percentage W of the chain carboxylate compound is 5% to 70%, and optionally 10% to 60%, 10% to 70%, 5% to 60%, and 30% to 70%.

In some embodiments, based on the total mass of the electrolyte, the mass percentage W of the chain carboxylate compound is optionally 5%, 10%, 15%, 20%, 25%, 30%, 35%, 40%, 45%, 50%, 55%, 60%, 65%, and 70%, or a value in a range consisting of any two of the above.

The mass percentage of the chain carboxylate compound is controlled within an appropriate range, which can not only effectively reduce the viscosity of the electrolyte, increase the transport rate of metal ions, improve the kinetics performance of the secondary battery and improve the fast charge performance of the secondary battery, but also reduce or minimize the effect of the deterioration in gas generation of the chain carboxylate compound on the service life of the secondary battery, thereby balancing the fast charge performance and the service life of the secondary battery.

In some embodiments, R is 0.05mL/Ah to 2mL/Ah, and optionally 0.1mL/Ah to 1.5mL/Ah or 0.1mL/Ah to 2mL/Ah.

In some embodiments, R is optionally 0.05mL/Ah, 0.1mL/Ah, 0.2mL/Ah, 0.4mL/Ah, 0.5mL/Ah, 0.6mL/Ah,

0.8mL/Ah, 1mL/Ah, 1.2mL/Ah, 1.4mL/Ah, 1.5mL/Ah, 1.6mL/Ah, 1.8mL/Ah and 2mL/Ah, or a value in a range consisting of any two of the above.

R is controlled within an appropriate range, which can provide a sufficient space to accommodate gas generated by side reactions of the cell assembly, reduce the internal pressure of the battery case or maintain the basic stability of the internal pressure of the battery case and prolong service life of the secondary battery, and can also control the volume of the accommodating cavity within an appropriate range, avoid or reduce the increase in production cost due to the battery case being too large, and balance the service life and the production cost of the secondary battery.

In some embodiments, the electrolyte further contains a film-forming additive, the film-forming additive including one or more of a sulphate compound and a fluorocarbonate compound.

In some embodiments, the electrolyte contains a sulphate compound. In some embodiments, the electrolyte contains a fluorocarbonate compound. In some embodiments, the electrolyte contains a sulphate compound and a fluorocarbonate compound.

The film-forming additive may form a film on a positive electrode plate side to inhibit reactions of chain carboxylate on the positive electrode plate side. Moreover, the film-forming additive may also form a uniform and dense SEI film on a negative electrode plate side, which can further inhibit side reactions of the electrolyte on the negative electrode plate side, improve gas generation performance of the electrolyte, and prolong service life of the secondary battery.

In some embodiments, the sulphate compound includes one or more of 4,4'-bis(ethylene sulfate), ethylene sulfate, diethyl sulfate, dimethyl sulfate, and 4,4'-bi(1,3,2-dioxathiolane)-2,2,2,2-tetraoxide, and optionally includes one or more of 4,4'-bis(ethylene sulfate) and ethylene sulfate.

The above sulphate compound may form a $Li_2SO_4$-rich SEI film on the negative electrode plate side. The SEI film can inhibit the side reactions of the electrolyte on the negative electrode plate side, improve gas generation performance of the electrolyte, and prolong service life of the secondary battery.

In some embodiments, the fluorocarbonate compound includes one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro -2-methylethylene carbonate, or trifluoromethylethylene carbonate, and optionally includes fluoroethylene carbonate.

The fluorocarbonate compound described above may form a LiF-rich SEI film on the negative electrode plate side. The SEI film can inhibit the side reactions of the electrolyte on the negative electrode plate side, improve gas generation performance of the electrolyte, and prolong service life of the secondary battery.

In some embodiments, based on the total mass of the electrolyte, a mass percentage A of the sulphate compound and a mass percentage B of the fluorocarbonate compound satisfy: $0.03 \le A/B \le 20$, and optionally, $0.05 \le A/B \le 10$, $0.1 \le A/B \le 10$, $0.2 \le A/B \le 10$, $0.3 \le A/B \le 10$, $0.4 \le A/B \le 10$, $0. 5 \le A/B \le 10$, $0.7 \le A/B \le 10$ or $1 \le A/B \le 10$.

In some embodiments, based on the total mass of the electrolyte, a mass percentage A of the sulphate compound and a mass percentage B of the fluorocarbonate compound satisfy: A/B is optionally equal to 0.02, 0.05, 0.1, 0.5, 1, 2, 4, 5, 6, 8, 10, 12, 14, 15, 16, 18, 20, or is equal to a value in a range consisting of any two of the above.

The sulphate compound and the fluorocarbonate compound are used in combination, which is conducive to further inhibiting the side reactions of the electrolyte. Moreover, a mass ratio between the sulphate compound and the fluorocarbonate compound is controlled within an appropriate range, enabling the secondary battery to have excellent fast charge performance and long service life.

In some embodiments, based on the total mass of the electrolyte, the mass percentage A of the sulphate compound is 0.1% to 2%, and optionally 0.1% to 1.5%, 0.5% to 2%, or 0.5% to 1.5%.

In some embodiments, based on the total mass of the electrolyte, the mass percentage A of the sulphate compound is optionally 0.1%, 0.2%, 0.4%, 0.5%, 0.6%, 0.8%, 1%, 1.2%, 1.4%, 1.5%, 1.6%, 1.8%, and 2%, or a value in a range consisting of any two of the above..

In some embodiments, based on the total mass of the electrolyte, the mass percentage B of the fluorocarbonate compound is 0.1% to 5%, and optionally 0.1% to 4%, 1% to 5%, or 1% to 4%.

In some embodiments, based on the total mass of the electrolyte, the mass percentage B of the fluorocarbonate compound is optionally 0.1%, 0.2%, 0.5%, 1%, 1.5%, 2%, 2.5%, 3%, 3.5%, 4%, 4.5%, and 5%, or a value in a range consisting of any two of the above.

The mass percentages of the sulphate compound and the fluorocarbonate compound are controlled within an appropriate range respectively, which enables the film-forming additive in the secondary battery to be in an appropriate range, and can inhibit the interface side reactions of the positive electrode and/or negative electrode, and improve power performance of the secondary battery and prolong service life thereof.

In any embodiment, based on the total mass of the electrolyte, the mass percentage W of the chain carboxylate compound, the mass percentage A of the sulphate compound and the mass percentage B of the fluorocarbonate compound satisfy: $0.7 \le W/(A+B) \le 30$, and optionally $1 \le W/(A+B) \le 27.3$, $1 \le W/(A+B) \le 20$, $1 \le W/(A+B) \le 18$, $1 \le W/(A+B) \le 15$, or $1 \le W/(A+B) \le 10$.

In some embodiments, based on the total mass of the electrolyte, the mass percentage W of the chain carboxylate compound, the mass percentage A of the sulphate compound and the mass percentage B of the fluorocarbonate compound satisfy: W/(A+B) is optionally equal to 0.7, 1, 2, 5, 6, 10, 14, 15, 18, 20, 22, 25, 26, and 30, or equal to a value in a range consisting of any two of the above.

The mass percentage W of the chain carboxylate compound, the mass percentage A of the sulphate compound and the mass percentage B of the fluorocarbonate compound are controlled to satisfy the relationship of $0.7 \leq W/(A+B) \leq 30$, which enables the synergistic effect between the chain carboxylate compound and the film-forming additive, improves fast charge performance of the secondary battery and prolongs service life of the secondary battery. W, A and B are further controlled to satisfy the relationship of $1 \leq W/(A+B) \leq 27.3$, which is conducive to further improving fast charge performance of the secondary battery and prolonging service life thereof.

In some embodiments, the electrolyte further contains one or more of a cyclic ester solvent and a linear ester solvent.

In some embodiments, the cyclic ester solvent includes one or more of ethylene carbonate and propylene carbonate; and the linear ester solvent includes one or more of dimethyl carbonate, diethyl carbonate, methyl propyl carbonate, ethyl methyl carbonate, methyl formate, butyl acetate, methyl propionate, ethyl butyrate, propyl butyrate, butyl butyrate, isopropyl acetate, and isopentyl acetate.

In some embodiments, the electrolyte further contains a lithium salt, the lithium salt including one or more of LiFSI and $LiPF_6$.

In some embodiments, the electrolyte further contains a sodium salt, the sodium salt including one or more of NaFSI and $NaPF_6$.

In some embodiments, based on the total mass of the electrolyte, a mass percentage of the lithium salt is 8% to 20%, and optionally 10% to 15%.

In some embodiments, based on the total mass of the electrolyte, the mass percentage of the lithium salt is optionally 8%, 10%, 12%, 14%, 15%, 16%, 18%, and 20%, or a value in a range consisting of any two of the above.

In some embodiments, based on the total mass of the electrolyte, a mass percentage of the sodium salt is 9% to 21%, and optionally 11% to 16%.

In some embodiments, based on the total mass of the electrolyte, the mass percentage of the sodium salt is 9%, 10%, 11%, 12%, 14%, 15%, 16%, 18%, and 21%, or a value in a range consisting of any two of the above.

In some embodiments, a mixed solvent containing the chain carboxylate compound is used in the electrolyte of the secondary battery, e.g., the electrolyte contains different types of chain carboxylate compounds. In some embodiments, the electrolyte further contains a cyclic ester solvent.

In some embodiments, the solvent used in the electrolyte includes ethyl acetate, ethylene carbonate and dimethyl carbonate.

The lithium or sodium salt is controlled within an appropriate range, which is conducive to improving internal concentration polarization of the cell assembly, thereby prolonging service life of the secondary battery.

In some embodiments, the lithium salt includes LiFSI and $LiPF_6$. In some embodiments, based on the total mass of the electrolyte, a mass ratio of LiFSI to $LiPF_6$ is not less than 0.4 and not more than 7, and optionally the mass ratio of LiFSI and $LiPF_6$ is not less than 0.5 and not more than 6. In some embodiments, the mass ratio of LiFSI to $LiPF_6$ is not less than 0.5 and not more than 2.

In some embodiments, based on the total mass of the electrolyte, the mass ratio of LiFSI to $LiPF_6$ is optionally 0.4, 0.5, 1, 1.5, 2, 2.5, 3, 3.5, 4, 4.5, 5, 5.5, 6, 6.5, and 7, or a value in a range consisting of any two of the above.

For a lithium secondary battery, LiFSI and $LiPF_6$ are used in combination, enabling the electrolyte to have excellent lithium ion transport number and thermal stability. The ratio of the mass percentage between LiFSI and $LiPF_6$ is controlled within an appropriate range, which is conducive to improving fast charge performance of the secondary battery and prolonging service life thereof.

In some embodiments, the sodium salt includes NaFSI and $NaPF_6$. In some embodiments, based on the total mass of the electrolyte, a mass ratio of NaFSI to $NaPF_6$ is not less than 0.4 and not more than 7, and optionally the mass ratio of NaFSI to $NaPF_6$ is not less than 0.5 and not more than 6. In some embodiments, the mass ratio of NaFSI to $NaPF_6$ is not less than 0.5 and not more than 2.

In some embodiments, based on the total mass of the electrolyte, the mass percentage M of NaFSI and the mass percentage N of $NaPF_6$ satisfy: M/N is optionally equal to 0.4, 0.5, 1, 1.5, 2, 2.5, 3, 3.5, 4, 4.5, 5, 5.5, 6, 6.5, and 7, or is equal to a value in a range consisting of any two of the above.

For a sodium secondary battery, NaFSI and $NaPF_6$ are used in combination, enabling the electrolyte to have excellent sodium ion transport number and thermal stability. The ratio of the mass percentages of NaFSI and $NaPF_6$ is in an appropriate range, which is conducive to improving fast charge performance of the secondary battery and prolonging service life thereof.

In some embodiments, the electrolyte has a viscosity of 2 mPa.s to 5 mPa.s, and optionally 3 mPa.s to 4.6 mPa.s.

In some embodiments, the viscosity of the electrolyte is optionally 2 mPa.s, 2.5 mPa.s, 3 mPa.s, 3.5 mPa.s, 4

mPa.s, 4.5 mPa.s, and 5 mPa.s, or a value in a range consisting of any two of the above.

The viscosity of the electrolyte may be measured using any of measuring methods that have been well known to those skilled in the art. In some embodiments, the viscosity may be determined by the method described in "Viscosity test" in examples of the present application.

The viscosity of the electrolyte is in an appropriate range, which is conducive to increasing transport rate of metal ions, improving kinetics performance of the secondary battery, and improving fast charge performance of the secondary battery.

[Positive electrode plate]

A positive electrode plate includes a positive electrode current collector and a positive electrode film layer arranged on at least one surface of the positive electrode current collector, where the positive electrode film layer includes a positive electrode active material.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material of a lithium secondary battery may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium transition metal oxides may include, but are not limited to, at least one of a lithium-cobalt oxide (e.g., $LiCoO_2$), a lithium-nickel oxide (e.g., $LiNiO_2$), a lithium-manganese oxide (e.g., $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (e.g., $LiNi_{1/3}Co_{1/3}Mn_{1/3}O_2$ (also abbreviated as NCM333), $LiNi_{0.5}Co_{0.2}Mn_{0.3}O_2$ (also abbreviated as NCM523), $LiNi_{0.5}Co_{0.25}Mn_{0.25}O_2$ (also abbreviated as NCM211), $LiNi_{0.6}Co_{0.2}Mn_{0.2}O_2$ (also abbreviated as NCM622), $LiNi_{0.8}Co_{0.1}Mn_{0.1}O_2$ (also abbreviated as NCM811)), a lithium-nickel-cobalt-aluminum oxide (e.g., $LiNi_{0.85}Co_{0.15}Al_{0.05}O_2$), a modified compound thereof, and the like. Examples of lithium-containing phosphates of olivine structure may include, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode active material of a sodium secondary battery includes at least one of a transition metal layered oxide, a polyanionic compound and a Prussian blue compound, specifically including one or more of $NaNi_{1/3}Fe_{1/3}Mn_{1/3}O_2$, $Na(Cu_{1/9}Ni_{2/9}Fe_{1/3}Mn_{1/3})O_2$, $Na_{2/3}Ni_{1/6}Mn_{2/3}Cu_{1/9}Mg_{1/18}O_2$, $Na_4Fe_3(PO_4)_2P_20_7$, $NaFePO_4$, $Na_3V_2(PO_4)_3$, $Na_{1.9}CoFe(CN)_6$, $Na_2NiFe(CN)_6$, and $NaMnFe(CN)_6$. In some embodiments, the transition metal in the layered transition metal oxide may be at least one of Mn, Fe, Ni, Co, Cr, Cu, Ti, Zn, V, Zr, and Ce. Optionally, the layered transition metal oxide is, for example, $Na_xMO_2$, where M is one or more of Ti, V, Mn, Co, Ni, Fe, Cr, and Cu, and $0<x\leq1$. In some embodiments, the polyanionic compound may be a class of compounds having metal ions, transition metal ions, and tetrahedral $(YO_4)_n$. anion units. The metal ions is optionally one of sodium, lithium, potassium, and zinc ions; the transition metal ion is optionally at least one of Mn, Fe, Ni, Co, Cr, Cu, Ti, Zn, V, Zr, and Ce; Y is optionally at least one of P, S, and Si; and n represents the valence state of $(YO_4)^{n-}$. In some embodiments, the Prussian blue compound may be a class of compounds having sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, $Na_aMe_bMe'_c(CN)_6$, where Me and Me' are each independently at least one of Ni, Cu, Fe, Mn, Co, and Zn, with $0<a\leq2$, $0<b<1$, and $0<c<1$.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may include at least one of superconducting carbon, acetylene black, carbon black, Ketjen

black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

[Negative electrode plate]

The negative electrode plate includes a negative electrode current collector and a negative electrode film layer arranged on at least one surface of the negative electrode current collector.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

[Separator]

In some embodiments, the secondary battery further comprises a separator. Any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film. When the separator is a multi-layer composite film, the material in each layer may be same or different.

In some embodiments, the positive electrode plate, the negative electrode plate, and the separator may be made into a cell assembly through winding or lamination.

In some embodiments, the secondary battery comprises a positive electrode plate, a negative electrode plate, a separator, and an electrolyte in some embodiments.

In some embodiments, the secondary battery has a CB value of 1.05 to 1.5, and optionally 1.05 to 1.3. The CB value is the ratio of a negative electrode lithiation capacity (or sodium intercalation) capacity to a positive electrode delithiation (or sodium deintercalation) capacity of a cell. The type of the active material and the coating thickness and compacted density of the electrode plates may affect the CB value of the secondary battery. In some embodiments, the CB

value of the secondary battery is adjusted by adjusting the coating thickness and compacted density of the electrode plates.

The CB value of the secondary battery is controlled within an appropriate range, which is conducive to providing sufficient active sites for the negative electrode plate to receive metal ions, improving active lithium or sodium precipitated from the interface of the negative electrode plate, and improving fast charge performance of the secondary battery.

In some embodiments, the secondary battery includes one or more of a lithium battery, a sodium battery, and a potassium battery.

In some embodiments, the secondary battery may include an outer package. The outer package can be used for encapsulating the above-mentioned cell assembly and electrolyte.

In some embodiments, the outer package of the secondary battery may be a hard case, such as a hard plastic case, an aluminum case, a steel case, and the like. The outer package of the secondary battery may also be a soft pack, such as a pouch. The material of the soft pack may be a plastic, and examples of the plastic may include polypropylene, polybutylene terephthalate, polybutylene succinate, and the like.

The shape of the secondary battery may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator are made into a cell assembly 52 through winding or lamination. The cell assembly 52 is encapsulated within the accommodating cavity. The cell assembly 52 is impregnated with the electrolyte. The number of cell assemblies 52 included in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

## EXAMPLES

Examples of the present application will be described below. The examples described below are exemplary and only used to explain the present application, and are not to be construed as limiting the present application. Where specific techniques or conditions are not specified in the examples, the techniques or conditions described in the literature of the art

or the product specifications are followed. Where manufacturers are not specified, the reagents or instruments used are conventional products and are commercially available.

**I. Preparation method**

Example 1

1) Electrolyte

In an argon-atmosphere glove box ($H_2O$<0.1 ppm, $O_2$<0.1 ppm), ethyl acetate (30% of the total mass of electrolyte), ethylene carbonate and dimethyl carbonate were mixed uniformly, a lithium salt LiFSI accounting for 15% of the total mass of the electrolyte was added, followed by stirring uniformly to obtain an electrolyte. Based on the total mass of the electrolyte, a mass ratio of ethylene carbonate to dimethyl carbonate in the electrolyte was 2:3, and the sum of mass percentages of the two was 55% (100% - the mass percentage of ethyl acetate in the electrolyte - the mass percentage of the lithium salt in the electrolyte - the mass percentage of a film-forming additive in the electrolyte).

2) Preparation of positive electrode plate

1wt% polyvinylidene fluoride as a binder was fully dissolved in N-methylpyrrolidone, and then 1wt% carbon black as a conductive agent and a 98wt% ternary positive electrode active material $[Ni_{0.5}Co_{0.2}Mn_{0.3}]O_2$ were added, followed by stirring uniformly, to obtain a positive electrode slurry. The slurry was uniformly applied on a surface of a current collector aluminum foil to prepare a positive electrode film layer with a coating thickness of 15 $mg/cm^2$. It was then transferred to a vacuum drying oven for full drying. The dried electrode plate was rolled and punched, with a compacted density of 3.4 $g/cm^3$, to obtain a positive electrode plate.

3) Preparation of negative electrode plate

A negative electrode active material artificial graphite, carbon black as a conductive agent, carboxymethyl cellulose (CMC) as a thickener, and styrene butadiene rubber (SBR) as a binder were mixed at a weight ratio of 96:2:1:1 and dissolved in deionized water to prepare a negative electrode slurry, the negative electrode slurry was obtained under action of a vacuum mixer, and then was applied on a surface of a copper foil, with a coating thickness of 8.4$mg/cm^2$. Finally, it was transferred into a vacuum drying oven for full drying, followed by slitting and die-cutting, with a compacted density of 3.4 $g/cm^3$, to obtain a negative electrode plate.

4) Separator

A polypropylene film was used as the separator.

5) Preparation of battery

The positive electrode plate, the separator and the negative electrode plate were stacked in sequence, the separator was positioned between the positive electrode plate and the negative electrode plate and functioned to separate, a tab was welded to a bare cell, the bare cell was mounted into an aluminum case, baked at 80°C to remove water, and then the electrolyte was injected and encapsulated to obtain an uncharged battery. The uncharged battery was then sequentially subjected to processes such as standing, hot/cold pressing, formation, shaping, and capacity testing, where the internal volume of the accommodating capacity was 1011.3 ml, the volume of the cell assembly was 665 ml, the volume of the electrolyte was 225 ml, and the capacity of the secondary battery was 121.4 Ah, to obtain a lithium secondary battery product having a residual space of 1 mL/Ah.

Example 2

A method for preparing a battery in Example 2 is basically similar to that in Example 1, except that a film-forming additive is introduced into the electrolyte. The electrolyte is prepared by the following method:
In an argon-atmosphere glove box ($H_2O$<0.1 ppm, $O_2$<0.1 ppm), ethyl acetate (30% of the total mass of the electrolyte), ethylene carbonate and dimethyl carbonate were mixed uniformly, a lithium salt LiFSI accounting for 15% of the total mass of the electrolyte was added and stirred uniformly, and 4,4'-bis(ethylene sulfate) accounting for 1% of the total mass of the electrolyte was then added, followed by mixing uniformly, to obtain the electrolyte. Based on the total mass of the electrolyte, a mass ratio of ethylene carbonate to dimethyl carbonate in the electrolyte was 2:3, and the sum of mass

percentages of the two was 54%.

Example 3

A method for preparing a battery in Example 3 is basically similar to that in Example 1, except that a film-forming additive is introduced into the electrolyte. The electrolyte is prepared by the following method:
In an argon-atmosphere glove box ($H_2O$<0.1 ppm, $O_2$<0.1 ppm), ethyl acetate (30% of the total mass of the electrolyte), ethylene carbonate and dimethyl carbonate were mixed uniformly, a 15% of lithium salt LiF SI was added and stirred uniformly, and fluoroethylene carbonate accounting for 3% of the total mass of the electrolyte was then added, followed by mixing uniformly, to obtain the electrolyte. Based on the total mass of the electrolyte, a mass ratio of ethylene carbonate to dimethyl carbonate in the electrolyte was 2:3, and the sum of mass percentages of the two was 52%.

Example 4

A method for preparing a battery in Example 4 is basically similar to that in Example 1, except that a film-forming additive is introduced into the electrolyte. The electrolyte is prepared by the following method:
In an argon-atmosphere glove box ($H_2O$<0.1 ppm, $O_2$<0.1 ppm), ethyl acetate (30% of the total mass of the electrolyte), methyl acetate and dimethyl carbonate were mixed uniformly, a 15% of lithium salt LiFSI was added and stirred uniformly, and 4,4'-bis(ethylene sulfate) accounting for 1% of the total mass of the electrolyte and fluoroethylene carbonate accounting for 3% of the total mass of the electrolyte were then added, followed by mixing, to obtain the electrolyte. Based on the total mass of the electrolyte, a mass ratio of ethylene carbonate to dimethyl carbonate in the electrolyte was 2:3, and the sum of mass percentages of the two was 51%.

Methods for preparing a battery in Examples 5 to 11, Examples 18 to 29, and Examples 33 to 35 are basically similar to that in Example 4, except that the electrolyte preparation parameters are adjusted. The specific parameters are shown in Table 1.

Methods for preparing a battery in Examples 12 to 17 are similar to that in Example 4. Specifically, the internal volume of the accommodating cavity of the secondary battery was the same as the volume of the injected electrolyte, the volume of the cell assembly was adjusted to 613 ml and the capacity of the secondary battery was adjusted to 108.2 Ah to obtain a secondary battery with a residual space of 1.6 mL/Ah; the volume of the cell assembly was adjusted to 772 ml and the capacity of the secondary battery was adjusted to 140.2 Ah to obtain a secondary battery with a residual space of 0.1 mL/Ah; the volume of the cell assembly was adjusted to 779.2 ml and the capacity of the secondary battery was adjusted to 141.1 Ah to obtain a secondary battery with a residual space of 0.05 mL/Ah; the volume of the cell assembly was adjusted to 620 ml and the capacity of the secondary battery was adjusted to 110.2 Ah to obtain a secondary battery with a residual space of 1.5 mL/Ah; and the volume of the cell assembly was adjusted to 586 ml and the capacity of the secondary battery was adjusted to 99.9 Ah to obtain a secondary battery with a residual space of 2 mL/Ah.

Methods for preparing a battery in Examples 30 to 32 are similar to that in Example 4, except that the coating thickness of the negative electrode plate was adjusted to be 8.1 $mg/cm^2$, 10 $mg/cm^2$, and 11.6 $mg/cm^2$ and the CB value was 1.05, 1.3, and 1.5 respectively. The specific parameters are shown in Table 1.

Example 36

1) Electrolyte

In an argon-atmosphere glove box ($H_2O$<0.1 ppm, $O_2$<0.1 ppm), ethyl acetate (30% of the total mass of the electrolyte), ethylene carbonate and dimethyl carbonate were mixed uniformly, a sodium salt sodium hexafluorophosphate accounting for 15% of the total mass of the electrolyte was added and stirred uniformly, and 1% of 4,4'-bis(ethylene sulfate) and 3% of fluoroethylene carbonate were then added, followed by mixing, to obtain an electrolyte. Based on the total mass of the electrolyte, a mass ratio of ethylene carbonate to dimethyl carbonate in the electrolyte was 2:3, and the sum of mass percentages of the two was 51%.

2) Preparation of positive electrode plate

1wt% polyvinylidene difluoride as a binder was fully dissolved in N-methylpyrrolidone, and then 1wt% carbon black as a conductive agent and 98wt% Prussian white were added, followed by stirring uniformly, to obtain a positive electrode slurry. The slurry was uniformly applied on a surface of a current collector aluminum foil to prepare a positive electrode film layer with a coating thickness of 15 $mg/cm^2$. It was then transferred to a vacuum drying oven for full drying. The dried electrode plate was rolled and punched, with a compacted density of 3.4 $g/cm^3$, to obtain a positive electrode plate.

3) Preparation of negative electrode plate

A negative electrode active material hard carbon, carbon black as a conductive agent, carboxymethyl cellulose (CMC) as a thickener, and styrene butadiene rubber (SBR) as a binder were mixed at a weight ratio of 96:2:1:1 and dissolved in deionized water to prepare a negative electrode slurry, the negative electrode slurry was obtained under action of a vacuum mixer, and then was applied on a surface of a copper foil, with a coating thickness of 8.4mg/$cm^2$. Finally, it was transferred into a vacuum drying oven for full drying, followed by slitting and die-cutting, with a compacted density of 3.4 g/$cm^3$, to obtain an anode-free negative electrode plate.

4) Separator

A polypropylene film was used as the separator.

5) Preparation of battery

The positive electrode plate, the separator and the negative electrode plate were stacked in sequence, the separator was positioned between the positive electrode plate and the negative electrode plate and functioned to separate, a tab was welded to a bare cell, the bare cell was mounted into an aluminum case, baked at 80°C to remove water, and then the electrolyte was injected and encapsulated to obtain an uncharged battery. The uncharged battery then went through processes such as standing, hot and cold pressing, formation, shaping and capacity testing successively to obtain a sodium secondary battery product of Example 33.

Methods for preparing a battery in Examples 37 to 38 are basically similar to that in Example 36, except that the electrolyte preparation parameters are adjusted. The specific parameters are shown in Table 1.

A method for preparing a battery in Comparative Example 1 is basically similar to that in Example 1, where the volume of the cell assembly was adjusted to 783.4 ml and the capacity of the secondary battery was adjusted to 142.3 Ah to obtain a secondary battery with a residual space of 0.02 mL/Ah and a value of W/R of 15. The specific parameters are shown in Table 1.

A method for preparing a battery in Comparative Example 2 is basically similar to that in Comparative Example 1, except that the value of W/R is 0.02. The specific parameters are shown in Table 1.

A method for preparing a battery in Comparative Example 3 is basically similar to that in Comparative Example 1, except that the electrolyte does not contain a film-forming additive. The specific parameters are shown in Table 1.

A method for preparing a battery in Comparative Example 4 is basically similar to that in Comparative Example 2, except that the electrolyte does not contain a film-forming additive. The specific parameters are shown in Table 1.

A method for preparing a battery in Comparative Example 5 is basically similar to that in Example 1, except that the electrolyte does not contain a carboxylate compound and a film-forming additive. The specific parameters are shown in Table 1.

A method for preparing a battery in Comparative Example 6 is basically similar to that in Comparative Example 1, except that the electrolyte salt is adjusted to a sodium salt. The specific parameters are shown in Table 1.

## II. Performance Test

1. Electrolyte test

1) Viscosity test

A shear force exerted on a rotor as it continues to rotate at a constant speed in a sample at a specific temperature causes a spring to generate torque, the torque is proportional to the viscosity, from which a viscosity value is obtained.

Specifically, the viscosity of the electrolyte was measured using a rotational viscometer, here a Brookfield (DV-2TLV) viscometer was used. At an ambient temperature of 25°C and an ambient humidity of <80%, 30 mL of electrolyte was placed in a beaker, the beaker was placed in a water bath at 25°C for at least 30 min at a constant temperature, the rotor was mounted in a sample cup, a sample of the above electrolyte was added to a point of about 0.3 cm from the mouth of the cup, the viscometer connected to the rotor was started, and the test was carried out at a rotational speed of 70 rpm. 10 data points were captured, and the average value was taken as the viscosity.

2. Battery performance test

1) Direct-current resistance (DCR) test

At -25°C, a single cell was adjusted into a charge state of 50% SOC and subjected to standing for 30 min, a battery voltage at this time was recorded as U1(V); and then, the cell was discharged at 0.36C for 10s, a battery voltage at this time was recorded as U2(V), and correspondingly, a battery discharge current I(mA) was 0.36x battery design capacity (mAh). DCR (mΩ)=(U1-U2)/I.

2) Fast charge capacity test

The battery of the respective examples and comparative examples was first charged and discharged with a current at 1C (i.e., the current value when a theoretical capacity is completely discharged in 1h), which specifically included: charging the battery with a constant current at a rate of 1C to a voltage of 4.25V at 35°C, charging it with a constant voltage to a current of ≤0.05C, followed by standing for 5 min, and then discharging the battery with a constant current at a rate of 0.33C to a voltage of 2.8V, followed by recording its actual capacity as C0. After that, the battery was sequentially charged with a constant current at 1.0C0, 1.3C0, 1.5C0, 1.8C0, 2.0C0, 2.3C0, 2.5C0, 3.0C0, 3.5C0, 4C0, 4.5C0, and 5C0 to a full-battery charge cut-off voltage of 4.25V or 0V negative electrode cut-off potential (whichever is reached first). Each time the charging was completed, the battery needed to be discharged at 1C0 to a full-battery discharge cut-off voltage of 2.8V. The negative electrode potential corresponding to charging to 10%, 20%, 30%, ..., 80% SOC (State of Charge, when "SOC=0", it means the battery is fully discharged, and when "SOC=100%", it means the battery is fully charged) at different charging rates was recorded. Charging rate-negative electrode potential curves under different SOC states were drawn, and were linearly fit to obtain the charging rate corresponding to the negative electrode potential of 0V under different SOC states. The charging rate was a charging window in this SOC state, which was denoted as C10% SOC, C20% SOC, C30% SOC, C40% SOC, C50% SOC, C60% SOC, C70% SOC, C80% SOC, respectively. A charging time T in min for charging this battery from 10% SOC to 80% SOC was obtained by calculating according to a formula (60/C20% SOC+60/C30% SOC+60/C40% SOC+60/C50% SOC+60/C60% SOC+60/C70% SOC+60/C80% SOC) x 10%. The shorter the time, the better the fast charge performance of the battery.

3) High-temperature gas generation test

A high-temperature gas generation test process is as follows: the prepared battery was charged to 100% SOC at a rate of 0.1 C and stored at 60°C, a barometer was used for monitoring an internal pressure of the battery online, and the number of storage days at 60°C was recorded when a cut-off pressure was 0.35 MPa.

4) Cycling performance test

A cycling performance test process is as follows: the prepared battery was charged to 4.25 V with a constant current at 1 C at 45°C, and was charged with a constant voltage of 4.25 V until the current dropped to 0.05 C, and then discharged to 2.5 V with a constant current at 1 C after 5 min of standing, and this process was a first charge/discharge cycle of the battery, where the discharge capacity in this time was recorded as a discharge capacity (C1) of the battery in the first cycle; the above steps were repeated for the same battery to obtain a process capacity (Cn) of the battery after nth cycle, and the capacity retention rate after the nth cycle = Cn/C1 × 100%. The number of cycles where the cycling capacity retention rate is 80% was recorded. The testing processes of the comparative examples and the other examples are the same as above.

5) Secondary battery CB value test

1. A positive electrode delithiation (or sodium deintercalation) capacity test method is as follows:
A cold-pressed positive electrode plate or a positive electrode plate detached from a battery in a PRS340/11-119-11 Mbraun glove box was assembled into a CR2430 model button-type half-battery with a positive electrode lithium (or sodium) plate, the positive electrode plate having an area of a $mm^2$, and 1M of $LIPF_6$ was used with ethylene carbonate, ethyl methyl carbonate, and diethyl carbonate at a mass ratio of 3:5:2 to prepare an electrolyte. The assembled button-type half battery was subjected to standing for 3h and was tested at 25°C. The battery was charged for delithiation (sodium deintercalation) at 0.1C in a voltage interval of 2.5V-eV, where e was an upper limit service voltage of the cell design; the battery was discharged at 0.05C to 2.5V, followed by cycling twice, and the button battery charge capacity in the second cycle was denoted as Y mAh. In actual battery design, a positive electrode film plate has a length of b mm and a width of c mm, the number of surfaces of a positive electrode current collector that were coated

with a positive electrode material is d, and a positive electrode delithiation (or sodium deintercalation) capacity is X=Y/a×b×c×d.

2. A negative electrode lithiation (or sodium intercalation) capacity test method:
A fresh cold-pressed negative electrode plate or a negative electrode plate detached from a battery in a PRS340/11-119-11 Mbraun glove box was assembled into a CR2430 model button-type half battery, the negative electrode plate having an area of f $mm^2$, and 1M of $LIPF_6$ was used with ethylene carbonate, ethyl methyl carbonate and diethyl carbonate at a mass ratio of 3:5:2 to prepare an electrolyte. The assembled button-type half battery was subjected to standing for 3h, and the test was carried out at 25°C. The battery was discharged for lithiation (or sodium intercalation) at 0.1C in a voltage interval of 2V-0V for, and then was charged for delithiation (or sodium deintercalation) at 0.05C to 2V, followed by cycling twice; a button-type battery discharge capacity in the second cycle was denoted as Z mAh, and a negative electrode film plate in actual battery design has a length of h mm and a width of j mm. The number of surfaces of the negative electrode current collector that were coated with a negative electrode active material is d, then a negative electrode delithiation capacity is W = Z / f × h × i × d.

### III. Analysis of testing results of examples and comparative examples

Batteries of the examples and comparative examples are each prepared according to the above methods, and measured for various performance parameters. The results are shown in Table 1 and Table 2 below.

Table 1

| No. | Electrolyte solution | | | | | | | | |
|---|---|---|---|---|---|---|---|---|---|
| | Chain carboxylate | | Film-forming additive | | | | | Lithium salt/sodium salt | |
| | Material | Mass percentage W/% | Sulphate compound | Mass percentage of sulphate compound A/% | Fluorocarbonate compound | Mass percentage of fluorocarbonate compound B/% | A/ B | Electrolyte salt | Electrolyte salt wt% |
| Example 1 | Ethyl acetate | 30 | / | / | / | / | / | LiFSI | 15 |
| Example 2 | Ethyl acetate | 30 | 4,4'-Bis(ethylene sulfate) | 1 | / | / | / | LiFSI | 15 |
| Example 3 | Ethyl acetate | 30 | / | / | Fluoroethylene carbonate | 3 | / | LiFSI | 15 |
| Example 4 | Methyl acetate | 30 | 4,4'-Bis(ethylene sulfate) | 1 | Fluoroethylene carbonate | 3 | 0. 33 | LiFSI | 15 |
| Example 5 | Ethyl propion ate | 30 | 4,4'-Bis(ethylene sulfate) | 1 | Fluoroethylene carbonate | 3 | 0. 33 | LiFSI | 15 |
| Example 6 | Methyl propion ate | 30 | 4,4'-Bis(ethylene sulfate) | 1 | Fluoroethylene carbonate | 3 | 0. 33 | LiFSI | 15 |
| Example 7 | Ethyl acetate | 5 | 4,4'-Bis(ethylene sulfate) | 1 | Fluoroethylene carbonate | 3 | 0. 33 | LiFSI | 15 |
| Example 8 | Ethyl acetate | 10 | 4,4'-Bis(ethylene sulfate) | 1 | Fluoroethylene carbonate | 3 | 0. 33 | LiFSI | 15 |
| Example 9 | Ethyl acetate | 30 | 4,4'-Bis(ethylene sulfate) | 1 | Fluoroethylene carbonate | 3 | 0. 33 | LiFSI | 15 |
| Example 10 | Ethyl acetate | 60 | 4,4'-Bis(ethylene sulfate) | 1 | Fluoroethylene carbonate | 3 | 0. 33 | LiFSI | 15 |
| Example 11 | Ethyl acetate | 70 | 4,4'-Bis(ethylene sulfate) | 1 | Fluoroethylene carbonate | 3 | 0. 33 | LiFSI | 15 |
| Example 12 | Ethyl acetate | 5 | 4,4'-Bis(ethylene sulfate) | 1 | Fluoroethylene carbonate | 3 | 0. 33 | LiFSI | 15 |

(continued)

| No. | Electrolyte solution | | | | | | | | |
|---|---|---|---|---|---|---|---|---|---|
| | Chain carboxylate | | Film-forming additive | | | | | Lithium salt/sodium salt | |
| | Material | Mass percentage W/% | Sulphate compound | Mass percentage of sulphate compound A/% | Fluorocarbonate compound | Mass percentage of fluorocarbonate compound B/% | A/ B | Electrolyte salt | Electrolyte salt wt% |
| Example 13 | Ethyl acetate | 70 | 4,4'-Bis(ethylene sulfate) | 1 | Fluoroethylene carbonate | 3 | 0. 33 | LiFSI | 15 |
| Example 14 | Ethyl acetate | 30 | 4,4'-Bis(ethylene sulfate) | 1 | Fluoroethylene carbonate | 3 | 0. 33 | LiFSI | 15 |
| Example 15 | Ethyl acetate | 30 | 4,4'-Bis(ethylene sulfate) | 1 | Fluoroethylene carbonate | 3 | 0. 33 | LiFSI | 15 |
| Example 16 | Ethyl acetate | 30 | 4,4'-Bis(ethylene sulfate) | 1 | Fluoroethylene carbonate | 3 | 0. 33 | LiFSI | 15 |
| Example 17 | Ethyl acetate | 30 | 4,4'-Bis(ethylene sulfate) | 1 | Fluoroethylene carbonate | 3 | 0. 33 | LiFSI | 15 |
| Example 18 | Ethyl acetate | 30 | 4,4'-Bis(ethylene sulfate) | 0.1 | Fluoroethylene carbonate | 3 | 0. 03 | LiFSI | 15 |
| Example 19 | Ethyl acetate | 30 | 4,4'-Bis(ethylene sulfate) | 0.5 | Fluoroethylene carbonate | 3 | 0. 17 | LiFSI | 15 |
| Example 20 | Ethyl acetate | 30 | 4,4'-Bis(ethylene sulfate) | 1.5 | Fluoroethylene carbonate | 3 | 0. 50 | LiFSI | 15 |
| Example 21 | Ethyl acetate | 30 | 4,4'-Bis(ethylene sulfate) | 2 | Fluoroethylene carbonate | 3 | 0. 67 | LiFSI | 15 |
| Example 22 | Ethyl acetate | 30 | 4,4'-Bis(ethylene sulfate) | 1 | Fluoroethylene carbonate | 0.1 | 10 0 0 | LiFSI | 15 |
| Example 23 | Ethyl acetate | 30 | 4,4'-Bis(ethylene sulfate) | 1 | Fluoroethylene carbonate | 1 | 1. 00 | LiFSI | 15 |
| Example 24 | Ethyl acetate | 30 | 4,4'-Bis(ethylene sulfate) | 1 | Fluoroethylene carbonate | 4 | 0. 25 | LiFSI | 15 |
| Example 25 | Ethyl acetate | 30 | 4,4'-Bis(ethylene sulfate) | 1 | Fluoroethylene carbonate | 5 | 0. 20 | LiFSI | 15 |

(continued)

| No. | Electrolyte solution | | | | | | | | |
|---|---|---|---|---|---|---|---|---|---|
| | Chain carboxylate | | Film-forming additive | | | | | Lithium salt/sodium salt | |
| | Material | Mass percentage W/% | Sulphate compound | Mass percentage of sulphate compound A/% | Fluorocarbonate compound | Mass percentage of fluorocarbonate compound B/% | A/ B | Electrolyte salt | Electrolyte salt wt% |
| Example 26 | Ethyl acetate | 5 | 4,4'-Bis(ethylene sulfate) | 2 | Fluoroethylene carbonate | 5 | 0. 40 | LiFSI | 15 |
| Example 27 | Ethyl acetate | 30 | 4,4'-Bis(ethylene sulfate) | 1 | Fluoroethylene carbonate | 3 | 0. 33 | LiFSI | 8 |
| Example 28 | Ethyl acetate | 30 | 4,4'-Bis(ethylene sulfate) | 1 | Fluoroethylene carbonate | 3 | 0. 33 | LiFSI | 10 |
| Example 29 | Ethyl acetate | 30 | 4,4'-Bis(ethylene sulfate) | 1 | Fluoroethylene carbonate | 3 | 0. 33 | LiFSI | 20 |
| Example 30 | Ethyl acetate | 30 | 4,4'-Bis(ethylene sulfate) | 1 | Fluoroethylene carbonate | 3 | 0. 33 | LiFSI | 15 |
| Example 31 | Ethyl acetate | 30 | 4,4'-Bis(ethylene sulfate) | 1 | Fluoroethylene carbonate | 3 | 0. 33 | LiFSI | 15 |
| Example 32 | Ethyl acetate | 30 | 4,4'-Bis(ethylene sulfate) | 1 | Fluoroethylene carbonate | 3 | 0. 33 | LiFSI | 15 |
| Example 33 | Ethyl acetate | 30 | 4,4'-Bis(ethylene sulfate) | 1 | Fluoroethylene carbonate | 3 | 0. 33 | $LiPF_6$ | 15 |
| Example 34 | Ethyl acetate | 30 | 4,4'-Bis(ethylene sulfate) | 1 | Fluoroethylene carbonate | 3 | 0. 33 | LiFSI:Li PF6 (mass ratio 3:4) | 15 |
| Example 35 | Ethyl acetate | 30 | 4,4'-Bis(ethylene sulfate) | 1 | Fluoroethylene carbonate | 3 | 0. 33 | LiFSI:Li $PF_6$ (mass ratio 5:5) | 15 |
| Example 36 | Ethyl acetate | 30 | 4,4'-Bis(ethylene sulfate) | 1 | Fluoroethylene carbonate | 3 | 0. 33 | $NaPF_6$ | 15 |
| Example 37 | Ethyl acetate | 30 | 4,4'-Bis(ethylene sulfate) | 1 | Fluoroethylene carbonate | 3 | 0. 33 | NaF SI | 15 |

(continued)

| No. | Electrolyte solution | | | | | | | | |
|---|---|---|---|---|---|---|---|---|---|
| | Chain carboxylate | | Film-forming additive | | | | | Lithium salt/sodium salt | |
| | Material | Mass percentage W/% | Sulphate compound | Mass percentage of sulphate compound A/% | Fluorocarbonate compound | Mass percentage of fluorocarbonate compound B/% | A/ B | Electrolyte salt | Electrolyte salt wt% |
| Example 38 | Ethyl acetate | 30 | 4,4'-Bis(ethylene sulfate) | 1 | Fluoroethylene carbonate | 3 | 0. 33 | NaFSI+ $NaPF_6$ (mass ratio 5:5) | 15 |
| Comparative Example 1 | Ethyl acetate | 30 | 4,4'-Bis(ethylene sulfate) | 1 | Fluoroethylene carbonate | 3 | 0. 33 | LiFSI | 15 |
| Comparative Example 2 | Ethyl acetate | 2 | 4,4'-Bis(ethylene sulfate) | 1 | Fluoroethylene carbonate | 3 | 0. 33 | LiFSI | 15 |
| Comparative Example 3 | Ethyl acetate | 30 | / | / | / | / | / | LiFSI | 15 |
| Comparative Example 4 | Ethyl acetate | 2 | / | / | / | / | / | LiFSI | 15 |
| Comparative Example 5 | / | / | / | / | / | / | / | LiFSI | 15 |
| Comparative Example 6 | Ethyl acetate | 30 | 4,4'-Bis(ethylene sulfate) | 1 | Fluoroethylene carbonate | 3 | 0. 33 | NaFSI | 15 |

Table 2

| No. | R (m L/A h) | W/ R | Viscosity/ mPa·S | W/(A +B) | CB value | Direct-current resistance (mQ) | Fast charge capacity 10-80% SOC Charge time (min) | Number of high-temperature storage days/days | Number of cycling cycles/cycles |
|---|---|---|---|---|---|---|---|---|---|
| Example 1 | 1 | 0.3 | 3.7 | / | 1.1 | 7 | 9 | 100 | 912 |
| Example 2 | 1 | 0.3 | 3.7 | 30.0 | 1.1 | 7.2 | 11.5 | 135 | 1027 |
| Example 3 | 1 | 0.3 | 3.7 | 10.0 | 1.1 | 8 | 12.5 | 130 | 1031 |
| Example 4 | 1 | 0.3 | 3.5 | 7.5 | 1.1 | 8 | 12 | 151 | 1320 |
| Example 5 | 1 | 0.3 | 3.9 | 7.5 | 1.1 | 8.3 | 13 | 168 | 1411 |
| Example 6 | 1 | 0.3 | 4 | 7.5 | 1.1 | 8.4 | 13.5 | 175 | 1450 |
| Example 7 | 1 | 0.0 5 | 4 | 1.3 | 1.1 | 9 | 14.5 | 198 | 1572 |
| Example 8 | 1 | 0.1 | 3.9 | 2.5 | 1.1 | 8.9 | 14.3 | 195 | 1580 |
| Example 9 | 1 | 0.3 | 3.7 | 7.5 | 1.1 | 8.2 | 12.8 | 158 | 1350 |
| Example 10 | 1 | 0.6 | 3.3 | 15.0 | 1.1 | 7.4 | 10.5 | 134 | 1311 |
| Example 11 | 1 | 0.7 | 3.2 | 17.5 | 1.1 | 7.2 | 10.3 | 111 | 1150 |
| Example 12 | 1.6 | 0.0 3 | 4 | 1.3 | 1.1 | 9 | 14.5 | 232 | 1825 |
| Example 13 | 0.1 | 7 | 3.2 | 17.5 | 1.1 | 7.2 | 10.3 | 75 | 950 |
| Example 14 | 0.0 5 | 6 | 3.7 | 7.5 | 1.1 | 8.2 | 12.8 | 81 | 1022 |
| Example 15 | 0.1 | 3 | 3.7 | 7.5 | 1.1 | 8.2 | 12.8 | 85 | 1054 |
| Example 16 | 1.5 | 0.2 | 3.7 | 7.5 | 1.1 | 8.2 | 12.8 | 250 | 1800 |
| Example 17 | 2 | 0.1 5 | 3.7 | 7.5 | 1.1 | 8.2 | 12.8 | 280 | 1850 |
| Example 18 | 1 | 0.3 | 3.7 | 9.7 | 1.1 | 7.6 | 12 | 107 | 1033 |
| Example 19 | 1 | 0.3 | 3.7 | 8.6 | 1.1 | 7.7 | 12.2 | 133 | 1122 |
| Example 20 | 1 | 0.3 | 3.7 | 6.7 | 1.1 | 8.3 | 13 | 223 | 1550 |
| Example 21 | 1 | 0.3 | 3.7 | 6.0 | 1.1 | 8.7 | 13.2 | 240 | 1620 |
| Example 22 | 1 | 0.3 | 3.7 | 27.3 | 1.1 | 8.2 | 12.8 | 143 | 1113 |
| Example 23 | 1 | 0.3 | 3.7 | 15.0 | 1.1 | 8.3 | 13 | 145 | 1217 |
| Example 24 | 1 | 0.3 | 3.8 | 6.0 | 1.1 | 8.9 | 13.5 | 202 | 1654 |
| Example 25 | 1 | 0.3 | 3.9 | 5.0 | 1.1 | 9.1 | 14 | 205 | 1600 |
| Example 26 | 1 | 0.0 5 | 4.1 | 0.7 | 1.1 | 9.8 | 15 | 230 | 1840 |
| Example 27 | 1 | 0.3 | 3.2 | 7.5 | 1.1 | 10 | 15 | 153 | 1231 |
| Example 28 | 1 | 0.3 | 3.3 | 7.5 | 1.1 | 9.5 | 14.5 | 162 | 1350 |
| Example 29 | 1 | 0.3 | 3.9 | 7.5 | 1.1 | 9 | 13.5 | 167 | 1324 |
| Example 30 | 1 | 0.3 | 4.1 | 7.5 | 1.05 | 8.4 | 13 | 161 | 1350 |
| Example 31 | 1 | 0.3 | 4.1 | 7.5 | 1.3 | 7.5 | 11 | 151 | 1350 |
| Example 32 | 1 | 0.3 | 4.1 | 7.5 | 1.5 | 7 | 10 | 130 | 1350 |
| Example 33 | 1 | 0.3 | 4.2 | 7.5 | 1.1 | 8.6 | 13.5 | 160 | 1231 |
| Example 34 | 1 | 0.3 | 4 | 7.5 | 1.1 | 8.5 | 13.3 | 162 | 1250 |

(continued)

| No. | R (m L/A h) | W/ R | Viscosity/ mPa·S | W/(A +B) | CB value | Direct-current resistance (mQ) | Fast charge capacity 10-80% SOC Charge time (min) | Number of high-temperature storage days/days | Number of cycling cycles/cycles |
|---|---|---|---|---|---|---|---|---|---|
| Example 35 | 1 | 0.3 | 3.9 | 7.5 | 1.1 | 8.4 | 13.1 | 164 | 1250 |
| Example 36 | 1 | 0.3 | 4.2 | 7.5 | 1.1 | 8.6 | 13.5 | 160 | 1211 |
| Example 37 | 1 | 0.3 | 3.7 | 7.5 | 1.1 | 8.2 | 12.8 | 161 | 1350 |
| Example 38 | 1 | 0.3 | 4 | 7.5 | 1.1 | 8.4 | 13.1 | 160 | 1250 |
| Comparative Example 1 | 0.0 2 | 15 | 3.7 | 7.5 | 1.1 | 8.2 | 12.8 | 50 | 502 |
| Comparative Example 2 | 1 | 0.0 2 | 4.2 | 0.5 | 1.1 | 10 | 17 | 195 | 1509 |
| Comparative Example 3 | 0.0 2 | 15 | 3.7 | / | 1.1 | 7 | 9 | 30 | 310 |
| Comparative Example 4 | 1 | 0.0 2 | 4.2 | / | 1.1 | 10 | 17 | 150 | 1198 |
| Comparative Example 5 | 1 | / | 4.3 | / | 1.1 | 10.2 | 18 | 155 | 1202 |
| Comparative Example 6 | 0.0 2 | 15 | 3.7 | 7.5 | 1.1 | 7 | 9 | 50 | 505 |

Based on the above results, it can be seen that secondary batteries of Examples 1 to 38 each comprise a battery case having an accommodating cavity, a cell assembly disposed in the accommodating cavity, and an electrolyte. The electrolyte contains a chain carboxylate compound. Compared to Examples 3 and 4, based on the total mass of the electrolyte, the ratio of the mass percentage W of the chain carboxylate compound to the residual space R is not less than 0.03 and not more than 7, and the secondary battery produced has both good fast charge performance and long service life.

Film-forming additives, i.e., 4,4'-bis(ethylene sulfate) and fluoroethylene carbonate, are added in Example 2 and Example 3, respectively, to help to inhibit side reactions of electrode plates, improve gas generation performance of the electrolyte, and prolong service life of the secondary battery.

The specific type of the chain carboxylate compound solvent is adjusted in Examples 4 to 6. The results show that the use of methyl acetate, ethyl propionate, or methyl propionate as the solvent helps to obtain a secondary battery that has both good fast charge performance and long service life.

In Examples 7 to 11, the amount of ethyl acetate is adjusted to help to improve the storage performance and cycling performance of the secondary battery in a range of 5% to 70% of the total mass of the electrolyte and also to provide suitable fast charge performance, as compared to the Comparative Example 2.

In Examples 7 to 13, when the ratio of the mass percentage W of the chain carboxylate compound to the residual space R varies in a range of 0.03 to 7, the secondary battery has a good fast charge performance. When the ratio of the mass percentage W of the chain carboxylate compound to the residual space R varies in the range of 0.3 to 0.7, the secondary battery has excellent fast charge performance, cycling performance and life cycle.

The value of the residual space R is adjusted in Examples 12 to 17. The secondary battery produced has good cycling performance and long service life when R is in a range of 0.05 mL/Ah to 2 mL/Ah; and the secondary battery produced has excellent fast-charging performance, cycling performance and life cycle when R is in a range of 1.5 mL/Ah to 2 mL/Ah, as compared to Comparative Example 1.

In Examples 18 to 21, the amount of 4,4'-bis(ethylene sulfate) is adjusted; in Examples 22 to 25, the amount of fluoroethylene carbonate is adjusted; in Example 26, the amount of 4,4'-bis(ethylene sulfate) and fluoroethylene carbonate is adjusted; the ratio of the amount of 4,4'-bis(ethylene sulfate) to the amount of fluoroethylene carbonate is in a range of 0.03 to 10, which is conducive to increasing the number of high-temperature storage days and the number of

cycling cycles, i.e., prolonging the life cycle and improving the cycling performance of the secondary battery.

In Examples 27 to 29, the amount of the lithium salt is adjusted to 8% to 20% of the total mass of the electrolyte, which, when in the stated range, helps to improve the cycling performance of the secondary battery.

The type of the lithium salt is adjusted in Examples 33 to 35; and the type of the sodium salt is adjusted in Examples 36 to 38; with the use of film-forming additives for solvents, secondary batteries prepared from different lithium salts or combinations of lithium salts, sodium salts, or combinations of sodium salts, may all have the improved direct-current resistance.

In Examples 30 to 32, the CB value is adjusted to be in a range of 1.05 to 3, which is conducive to improving fast charge performance of the secondary battery.

As can be seem from the comparison between Example 4 and Example 5, ethyl acetate helps to reduce direct-current resistance and improve fast charge performance.

In Comparative Example 6, the size of the residual space R is adjusted. A suitable residual space value helps to improve cycling performance of the secondary battery as compared to Example 37.

It should be noted that the present application is not limited to the embodiments above. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

**1.** A secondary battery, comprising a battery case having an accommodating cavity, a cell assembly disposed in the accommodating cavity, and an electrolyte; wherein:

the electrolyte contains a chain carboxylate compound, where based on the total mass of the electrolyte, a mass percentage W of the chain carboxylate compound satisfies: $0.03 \leq W/R \leq 7$,

R is a residual space, and $R = \frac{V1-(V2+V3)}{C}$ mL/Ah, where V1 represents an internal volume of the accommodating cavity of the secondary battery; V2 represents a volume of the cell assembly; V3 represents a volume of the electrolyte; and C represents a discharge capacity of the secondary battery.

**2.** The secondary battery according to claim 1, wherein the chain carboxylate compound comprises a structure represented by Formula I,

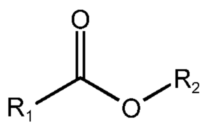

Formula I

where $R_1$ and $R_2$ each independently include a $C_{1-6}$ alkyl group.

**3.** The secondary battery according to claim 1 or 2, wherein the chain carboxylate compound comprises one or more of ethyl acetate, methyl acetate, ethyl propionate, propyl acetate, methyl propionate and methyl butyrate.

**4.** The secondary battery according to any one of claims 1 to 3, wherein based on the total mass of the electrolyte, the mass percentage W of the chain carboxylate compound is 5% to 70%, and optionally 10%-60%.

**5.** The secondary battery according to any one of claims 1 to 4, wherein R is 0.05 mL/Ah to 2 mL/Ah, and optionally 0.1 mL/Ah to 2mL/Ah.

**6.** The secondary battery according to any one of claims 1 to 5, wherein the mass percentage W of the chain carboxylate compound and the residual space R satisfy: $0.05 \leq W/R \leq 7$, $0.1 \leq W/R \leq 7$, $0.15 \leq W/R \leq 6$ or $3 \leq W/R \leq 7$.

**7.** The secondary battery according to any one of claims 1 to 6, wherein the electrolyte further contains a film-forming

additive, the film-forming additive comprising one or more of a sulphate compound and a fluorocarbonate compound.

**8.** The secondary battery according to claim 7, wherein the sulphate compound comprises one or more of 4,4'-bis(ethylene sulfate), ethylene sulfate, diethyl sulfate, dimethyl sulfate, and 4,4'-bi(1,3,2-dioxathiolane)- 2,2,2,2-tetraoxide, and optionally comprises one or more of 4,4'-bis(ethylene sulfate) and ethylene sulfate; and
the fluorocarbonate compound comprises one or more of fluoroethylidene carbonate, 1,2-difluoroethylidene carbonate, 1,1-difluoroethylidene carbonate, 1,1,2-trifluoroethylidene carbonate, 1,1,2,2-tetrafluoroethylidene carbonate, 1-fluoro-2-methylethylidene carbonate, 1-fluoro-1-methylethylidene carbonate, 1,2-difluoro-1-methylethylidene carbonate, 1,1,2-trifluoro - 2-methylethylidene carbonate, or trifluoromethylethylidene carbonate, and optionally comprises fluoroethylidene carbonate.

**9.** The secondary battery according to any one of claims 7 to 8, wherein based on the total mass of the electrolyte, a mass percentage A of the sulphate compound and a mass percentage B of the fluorocarbonate compound satisfy: $0.03 \leq A/B \leq 20$, and optionally $0.05 \leq A/B \leq 10$.

**10.** The secondary battery according to any one of claims 7 to 9, wherein based on the total mass of the electrolyte, the mass percentage A of the sulphate compound is 0.1% to 2%, and optionally 0.5% to 2%; and
the mass percentage B of the fluorocarbonate compound is 0.1% to 5%, and optionally 0.1% to 4%.

**11.** The secondary battery according to any one of claims 7 to 10, wherein based on the total mass of the electrolyte, the mass percentage W of the chain carboxylate compound, the mass percentage A of the sulphate compound and the mass percentage B of the fluorocarbonate compound satisfy: $0.7 \leq W/(A+B) \leq 30$, and optionally $1 \leq W/(A+B) \leq 27.3$.

**12.** The secondary battery according to any one of claims 1 to 11, wherein the electrolyte further contains a lithium salt, the lithium salt comprising one or more of LiFSI and $LiPF_6$; or,
the electrolyte further contains a sodium salt, the sodium salt comprising one or more of NaFSI and $NaPF_6$.

**13.** The secondary battery according to claim 12, wherein based on the total mass of the electrolyte, a mass percentage of the lithium salt is 8% to 20%, and optionally 10% to 15%; or
based on the total mass of the electrolyte, a mass percentage of the sodium salt is 9% to 21%, and optionally 11% to 16%.

**14.** The secondary battery according to claim 12 or 13, wherein the lithium salt comprises LiFSI and $LiPF_6$; and
based on the total mass of the electrolyte, a mass ratio of LiFSI to $LiPF_6$ is not less than 0.4 and not more than 7, and optionally, the mass ratio of LiFSI to $LiPF_6$ is not less than 0.5 and not more than 2.

**15.** The secondary battery according to any one of claims 12 to 14, wherein the sodium salt comprises NaFSI and $NaPF_6$; and
based on the total mass of the electrolyte, a mass ratio of NaFSI to $NaPF_6$ is not less than 0.4 and not more than 7, and optionally the mass ratio of NaFSI to $NaPF_6$ is not less than 0.5 and not more than 2.

**16.** The secondary battery according to any one of claims 1 to 15, wherein the electrolyte has a viscosity of 2 mPa.s to 5 mPa.s and optionally 3 mPa.s to 4.6 mPa.s as measured by a rotor test method at an ambient temperature of 25°C.

**17.** The secondary battery according to any one of claims 1 to 16, wherein the secondary battery has a CB value of 1.05 to 1.5, and optionally 1.05 to 1.3.

**18.** The secondary battery according to any one of claims 1 to 17, wherein the secondary battery comprises at least one of a lithium-ion battery, a sodium-ion battery, and a potassium-ion battery.

**19.** An electrical apparatus, comprising the secondary battery of any one of claims 1 to 18.

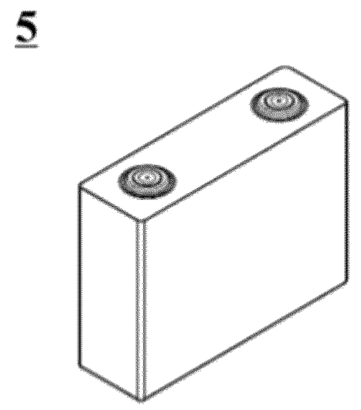


FIG. 1

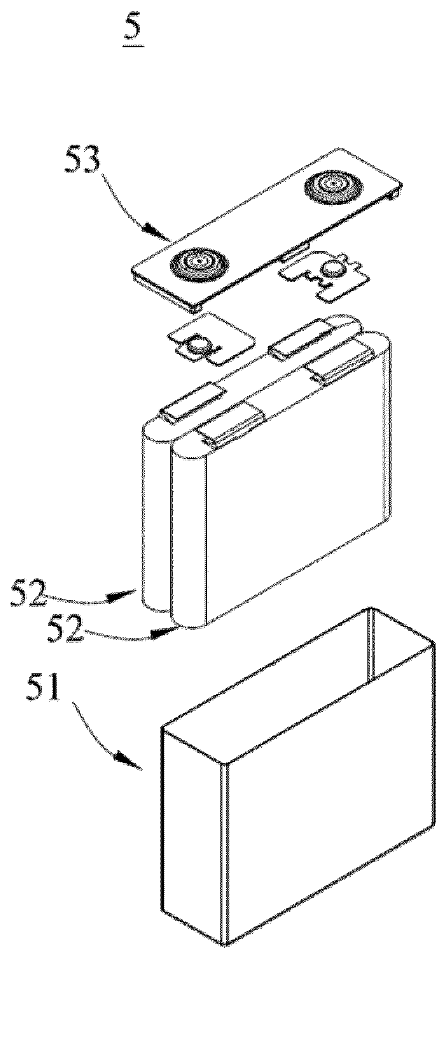


FIG. 2

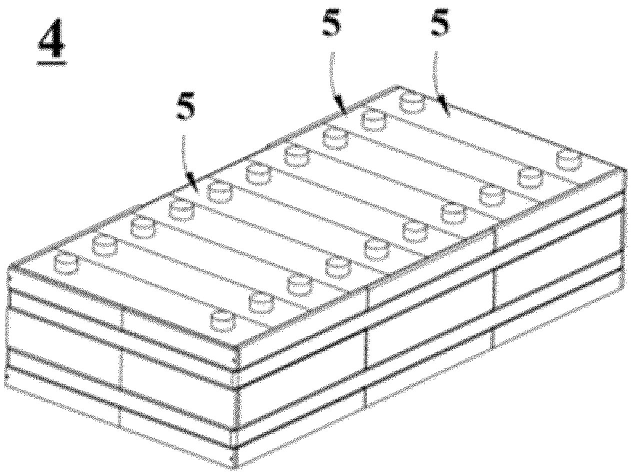


FIG. 3

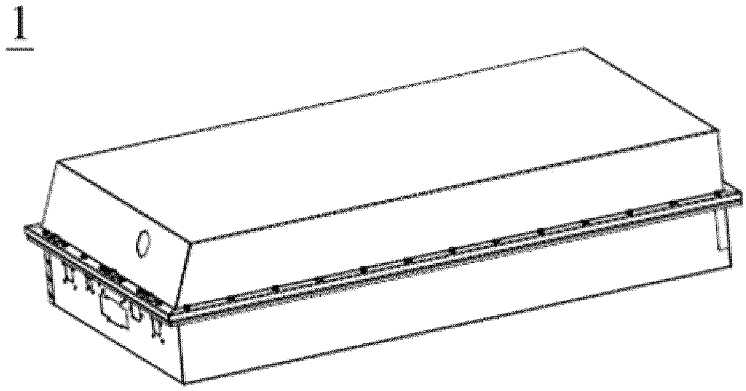


FIG. 4

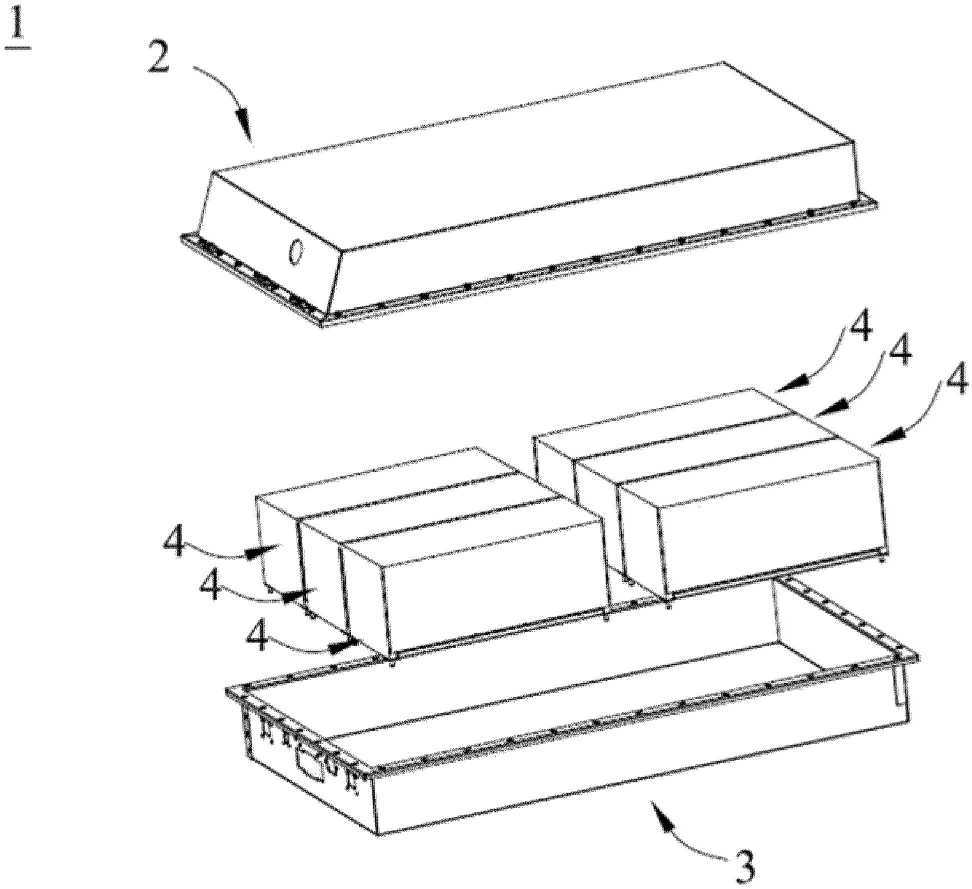


FIG. 5

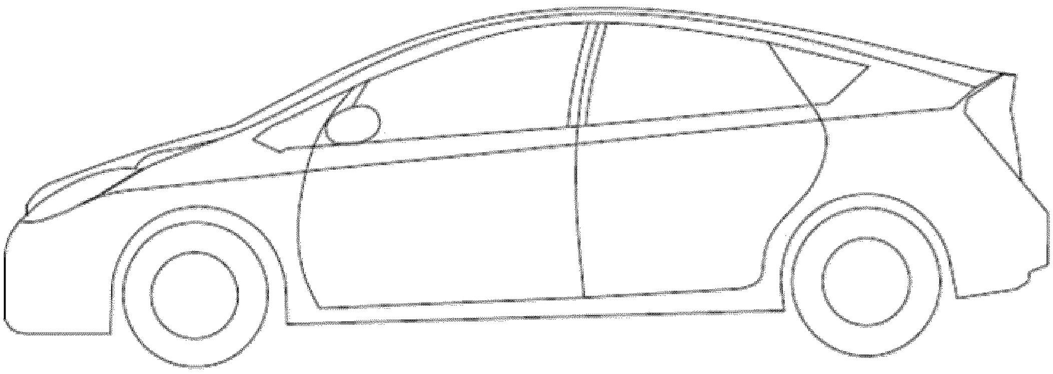

FIG. 6

**INTERNATIONAL SEARCH REPORT**

International application No. **PCT/CN2023/096412**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 电解液, 链状羧酸酯, 硫酸酯, 氟代碳酸酯, 残空间, 气体容纳空间, 剩余空间, batter+, cell?, electrolyte?, chain, carboxylic, ester, sulfuric, fluorocarbonat, gas, contain+, accommodat+, residual, space?

**C. DOCUMENTS CONSIDERED TO BE RELEVANT**

| Category* | Citation of document, with indication, where appropriate, of the relevant passages | Relevant to claim No. |
|---|---|---|
| Y | CN 111933946 A (NINGDE AMPEREX TECHNOLOGY LTD.) 13 November 2020 (2020-11-13)<br>description, paragraphs 54-104, 124-135 and 164-172 | 1-19 |
| Y | CN 109980225 A (NINGDE AMPEREX TECHNOLOGY LTD.) 05 July 2019 (2019-07-05)<br>description, paragraphs 51-111, 122-132 and 161-169 | 1-19 |
| Y | CN 216872160 U (NINGDE CONTEMPORARY AMPEREX TECHNOLOGY CO., LTD.) 01 July 2022 (2022-07-01)<br>description, paragraphs 74-123 | 1-19 |
| A | CN 111129498 A (NINGDE AMPEREX TECHNOLOGY LTD.) 08 May 2020 (2020-05-08)<br>entire document | 1-19 |
| A | CN 214411306 U (EVE ENERGY CO., LTD.) 15 October 2021 (2021-10-15)<br>entire document | 1-19 |
| A | JP 2008140760 A (SANYO ELECTRIC CO., LTD.) 19 June 2008 (2008-06-19)<br>entire document | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 December 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/096412**

| Patent document cited in search report | | | Publication date (day/month/year) | Patent family member(s) | | | Publication date (day/month/year) |
|---|---|---|---|---|---|---|---|
| CN | 111933946 | A | 13 November 2020 | None | | | |
| CN | 109980225 | A | 05 July 2019 | US | 2023290998 | A1 | 14 September 2023 |
| | | | | US | 2020303767 | A1 | 24 September 2020 |
| | | | | EP | 3942634 | A1 | 26 January 2022 |
| | | | | EP | 3942634 | A4 | 22 November 2023 |
| | | | | JP | 2021520023 | A | 12 August 2021 |
| | | | | JP | 7075993 | B2 | 26 May 2022 |
| | | | | WO | 2020186913 | A1 | 24 September 2020 |
| | | | | JP | 2021520023 | W | 12 August 2021 |
| CN | 216872160 | U | 01 July 2022 | WO | 2023108571 A | A1 | 22 June 2023 |
| CN | 111129498 | A | 08 May 2020 | WO | 2021128092 | A1 | 01 July 2021 |
| | | | | US | 2021376328 | A1 | 02 December 2021 |
| | | | | KR | 20220044605 | A | 08 April 2022 |
| | | | | JP | 2022550118 | W | 30 November 2022 |
| CN | 214411306 | U | 15 October 2021 | None | | | |
| JP | 2008140760 | A | 19 June 2008 | JP | 5219401 | B2 | 26 June 2013 |
| | | | | CN | 101090165 | A | 19 December 2007 |
| | | | | US | 2007287071 | A1 | 13 December 2007 |

Form PCT/ISA/210 (patent family annex) (July 2022)